**Europäisches Patentamt**

**European Patent Office**

**Office européen des brevets**

(19)

(11)    **EP 1 022 653 A1**

(12)    **EUROPÄISCHE PATENTANMELDUNG**

(43) Veröffentlichungstag:
   **26.07.2000   Patentblatt 2000/30**

(51) Int Cl.[7]: **G06F 7/72**

(21) Anmeldenummer: **99810044.0**

(22) Anmeldetag: **22.01.1999**

| | |
|---|---|
| (84) Benannte Vertragsstaaten:<br>**AT BE CH CY DE DK ES FI FR GB GR IE IT LI LU MC NL PT SE**<br>Benannte Erstreckungsstaaten:<br>**AL LT LV MK RO SI**<br><br>(71) Anmelder: **Ascom Systec AG**<br>   **5506 Mägenwil (CH)** | (72) Erfinder: **Zimmermann, Reto**<br>   **7430 Thusis (CH)**<br><br>(74) Vertreter: **Roshardt, Werner Alfred, Dipl.-Phys.**<br>   **Keller & Partner**<br>   **Patentanwälte AG**<br>   **Zeughausgasse 5**<br>   **Postfach**<br>   **3000 Bern 7 (CH)** |

(54)    **Verfahren zur Berechnung von modulo (2n+1)-Produkten und anschliessender modulo (2n)-Addition**

(57)    Bei einem Verfahren zur Bestimmung des modulo-Produktes $P = (X \cdot Y)\mathrm{mod}(2^n + 1)$ sowie der modulo-Summe $Q = (P + W)\mathrm{mod}(2^n)$ für binäre Zahlen X, Y und W der Länge n in normaler Zahlendarstellung wird P mittels Addition der partiellen Produkte bestimmt:

$$P = \left[ K + \sum_{i=0}^{n-1} \left( PP_i + 1 \right) \right] \mathrm{mod}(2^n + 1) \, .$$

Die partiellen Produkte PP, werden dabei erfindungsgemäss derart generiert, dass K konstant wird.

Ebenso wird bei der "carry-propagate" Schlussaddition von P ein Carrybit erzeugt, das auch zur Berechnung der modulo-Summe Q verwendet wird, wodurch eine schnellere Berechnung von Q möglich wird.

Das erfindungsgemässe Verfahren eignet sich sowohl zur Verarbeitung binärer Zahlen in normaler Zahlendarstellung, als auch zur Verarbeitung von Zahlen, die in "Diminished-1"-Darstellung vorliegen. Weiter kann das erfindungsgemässe Verfahren derart abgeändert werden, dass es sowohl die Generierung der partiellen Produkte mittels "Booth Recoding"-Algorithmus, als auch die Anwendung eines Wallace-Trees bei der Addition der partiellen Produkte erlaubt.

Fig. 2

EP 1 022 653 A1

**Beschreibung**

**Technisches Gebiet**

Die Erfindung betrifft ein Verfahren zur Bestimmung des modulo-Produktes $P = (X \cdot Y) \bmod(2^n + 1)$ sowie der modulo-Summe $Q = (P + W) \bmod(2^n)$ wobei X, Y, W, P und Q n-Bit Zahlen sind. Ferner betrifft die Erfindung eine Schaltungsanordnung zur Durchführung dieses Verfahrens.

**Stand der Technik**

Bei vielen Anwendungen, beispielsweise in der Kryptologie, bei der Generierung von Pseudozufallszahlen oder auch bei der RNS-Arithmetik (RNS = residue number systems), ist es wichtig, dass die Berechnung von modulo-Multiplikationen und modulo-Additionen mit hoher Geschwindigkeit durchgeführt werden kann. Aus der EP 0 482 154 B1 ist beispielsweise eine Vorrichtung zur Verschlüsselung digital vorliegender Daten bekannt, bei welcher mehrere modulo-Multiplikationen durchgeführt werden müssen, wobei nach rund der Hälfte dieser Multiplikationen direkt eine modulo-Addition folgt. Da diese Operationen mehrfach hintereinander durchgeführt werden, ist es besonders wichtig, dass deren Ausführung möglichst schnell erfolgt.

Aus dem Artikel "Regular VLSI Architectures for Multiplication Modulo $(2^n+1)$" von Curiger et al. IEEE Journal of solid-state Circuits, Vol. 26, No. 7, July 1991 ist beispielsweise ein Verfahren zur Berechnung von Multiplikationen modulo $(2^n+1)$ bekannt, das auf der Addition der partiellen Produkte basiert. Hierbei wird nach jeder Additionsstufe eine modulo-Korrektur durchgeführt, was entsprechend viel Zeit kostet. Aus dem gleichen Artikel ist ein weiteres Verfahren bekannt, das die modulo-Korrektur erst am Schluss für alle Additionsstufen gemeinsam durchführt. Eine Beschleunigung des Verfahrens wird durch die Anwendung des sogenannten "Booth Recoding"-Algorithmus erreicht, der eine schnellere Addition der partiellen Produkte ermöglicht. Nachteilig ist, dass die beiden Operanden in verschiedenen Zahlendarstellungen vorliegen müssen und dass eine komplizierte, unregelmässige Schaltungsanordnung resultiert.

Ferner ist aus dem Artikel "An Efficient Tree Architecture for Modulo $2^n+1$ Multiplication" von Zhongde Wang et al. Journal of VLSI Signal Processing 14, 241-248 (1996) ein Verfahren bekannt, welches ebenfalls auf der Addition der partiellen Produkte beruht. Dabei muss vor der Addition der partiellen Produkte ein Korrekturterm berechnet werden. Die anschliessende Addition der partiellen Produkte und des Korrekturterms wird durch die Anwendung eines "Wallace Trees" beschleunigt. Da die Berechnung des Korrekturterms nicht parallel zur Addition ausgeführt werden kann, sondern im voraus geschehen muss, geht dabei wertvolle Zeit verloren, was sich negativ auf die Geschwindigkeit des gesamten Verfahrens auswirkt.

Keine der bekannten Methoden zur Berechnung von modulo-Multiplikationen und -Additionen erfüllt daher die Anforderungen an ein effizientes Verfahren. Einerseits erfolgt die Berechnung des Resultats zu langsam und es resultiert eine Schaltungsanordnung mit hohem Platzbedarf oder einer komplizierten und damit unregelmässigen Architektur, was nicht nur die Entwicklung, sondern auch die Herstellung entsprechender Schaltungen verteuert.

**Darstellung der Erfindung**

Aufgabe der Erfindung ist es, ein Verfahren der eingangs erwähnten Art anzugeben, das die beim Stand der Technik vorhandenen Probleme vermeidet und insbesondere eine schnelle Durchführung von modulo-Multiplikationen bzw. -Additionen erlaubt.

Die Lösung der Aufgabe ist durch die Merkmale des Anspruchs 1 definiert. Der Erfindung liegt die Erkenntnis zugrunde, dass zur Berechnung des modulo-Produktes

$$(I) \qquad P = (X \cdot Y) \bmod(2^n + 1)$$

die Gleichung

$$(II) \qquad P = \left( \sum_{i=0}^{n-1} 2^i x_i \cdot Y \right) \bmod(2^n + 1) \cdot$$

zur Berechnung von P mittels Addition der Partialprodukte so umgeformt werden kann, dass die schaltungstechnisch vorteilhaftere Gleichung

$$(III) \qquad P = \left[ K + \sum_{i=0}^{n-1} \left( PP_i + 1 \right) \right] \mathrm{mod}(2^n + 1)$$

resultiert, wobei X und Y zwei Binärzahlen der Länge n in normaler Zahlendarstellung von der Form

$$(IV) \qquad X = \sum_{i=0}^{n-1} 2^i x_i = x_{n-1} x_{n-2} \cdots x_1 x_0 \qquad \text{und} \qquad Y = \sum_{i=0}^{n-1} 2^i y_i = y_{n-1} y_{n-2} \cdots y_1 y_0$$

sind, K eine Konstante und $PP_i$ das i-te partielle Produkt ist.

Während beim Stand der Technik vor der Addition der partiellen Produkte ein variabler Korrekturterm berechnet werden musste, kommt das erfindungsgemässe Verfahren mit einer Konstanten aus. Dadurch entfällt die aufwendige Berechnung, was eine erhebliche Zeitersparnis zur Folge hat.

Damit sowohl der Schaltungs- wie auch der Zeitaufwand minimal wird, wird die Berechnung von P gemäss Gleichung (III) mit folgenden Werten für die Konstante K und die n partiellen Produkte $PP_i$ ausgeführt:

$$(V) \qquad K=2$$

$$(VI) \qquad PP_i = x_i \cdot y_{n-i-1} \cdots y_0 \bar{y}_{n-1} \cdots \bar{y}_{n-i} + \bar{x}_i \cdot 0 \cdots 01 \cdots 1,$$

wobei mit $\bar{x}_i$ bzw. $\bar{y}_i$ jeweils das invertierte Bit von $x_i$ bzw. $y_i$ und mit $0 \cdots 01 \cdots 1$ eine n-Bit Zahl gemeint ist, deren obere $(n-i)$ Bits 0 und deren untere i Bits 1 sind. Damit erfolgt die Berechnung von P mit folgender Gleichung:

$$(VII) \qquad P = \left[ 2 + \sum_{i=0}^{n-1} \left( x_i \cdot y_{n-i-1} \cdots y_0 \bar{y}_{n-1} \cdots \bar{y}_{n-i} \quad + \quad \bar{x}_i \cdot 0 \cdots 01 \cdots 11 \quad + \quad 1 \right) \right] \mathrm{mod}(2^n + 1) \cdot$$

Um die Berechnung von P zu beschleunigen, können die partiellen Produkte $PP_i$ auch mittels "Booth Recoding"-Algorithmus (bit-pair recoding) generiert werden. Da hierbei die partiellen Produkte nicht Bit für Bit, sondern jeweils für Bitpaare generiert werden, wird die Anzahl der partiellen Produkte halbiert, womit die Berechnung der Summe schneller durchgeführt werden kann. Die Generierung der partiellen Produkte mittels "Booth Recoding" hat zur Folge, dass K und die $PP_i$ andere Werte annehmen und ein zusätzlicher Korrekturterm T aufaddiert werden muss. Damit ergibt sich für die Berechnung von P folgende Gleichung:

$$(VIII) \qquad P = \left[ K + T + \sum_{i=0}^{\frac{n}{2}-1} \left( PP_i + 1 \right) \right] \mathrm{mod}(2^n + 1) \cdot$$

Die Konstante K hat neu den Wert 1 und die Werte für die partiellen Produkte $PP_i$ sowie die n Bits $t_i$ des Korrekturterms T sind in Abhängigkeit von X aus folgender Tabelle ersichtlich:

| $x_{2i+1}$ | $x_{2i}$ | $x_{2i-1}$ | $PP_i$ | $t_{2i+1}$ | $t_{2i}$ |
|:---:|:---:|:---:|:---:|:---:|:---:|
| 0 | 0 | 0 | $0 \ldots 0\, 1 \ldots 1$ | 1 | 0 |
| 0 | 0 | 1 | $y_{n-2i-1} \cdots y_0\, \bar{y}_{n-1} \cdots \bar{y}_{n-2i}$ | 1 | 1 |
| 0 | 1 | 0 | $y_{n-2i-1} \cdots y_0\, \bar{y}_{n-1} \cdots \bar{y}_{n-2i}$ | 1 | 0 |
| 0 | 1 | 1 | $y_{n-2i-2} \cdots y_0\, \bar{y}_{n-1} \cdots \bar{y}n-2i-1$ | 1 | 0 |

(fortgesetzt)

| $x_{2i+1}$ | $x_{2i}$ | $x_{2i-1}$ | $PP_i$ | $t_{2i+1}$ | $t_{2i}$ |
|:---:|:---:|:---:|:---:|:---:|:---:|
| 1 | 0 | 0 | $\bar{y}_{n-2i-2} \cdots \bar{y}_0\, y_{n-1} \cdots y_{n-2i-1}$ | 0 | 1 |
| 1 | 0 | 1 | $\bar{y}_{n-2i-1} \cdots \bar{y}_0\, y_{n-1} \cdots y_{n-2i}$ | 0 | 1 |
| 1 | 1 | 0 | $\bar{y}_{n-2i-1} \cdots \bar{y}_0\, \bar{y}_{n-1} \cdots y_{n-2i}$ | 0 | 0 |
| 1 | 1 | 1 | $1 \ldots 1\, 0 \ldots 0$ | 0 | 1 |

Dabei muss beachtet werden, dass $x_{-1} = 0$ ist und die beiden Bits $t_0$ und $t_1$ Spezialfälle sind und folgendermassen berechnet werden:

$$(IX) \qquad t_0 = \bar{x}_1 \cdot \bar{x}_0 \cdot \bar{x}_{n-1} + x_1 \cdot \bar{x}_0 \cdot x_{n-1} + x_0 \cdot \bar{x}_{n-1} \quad \text{bzw.}$$
$$t_1 = \bar{x}_1 + \bar{x}_0 \cdot \bar{x}_{n-1}$$

wobei hier das "·"-Zeichen die logische "UND"-Verknüpfung und das "+"-Zeichen die logische "ODER"-Verknüpfung der einzelnen Bits darstellt.

Der Korrekturterm T kann somit auf einfache Art und Weise aus dem Operanden X generiert werden und darf nicht verwechselt werden mit dem im Stand der Technik erwähnten Korrekturterm, der im wesentlichen der Konstanten K entspricht und aufwendig berechnet werden muss.

Um die Summe

$$(X) \qquad K + \sum_{i=0}^{n-1}(PP_i + 1) \quad \text{bzw.} \quad K + T + \sum_{i=0}^{\frac{n}{2}-1}(PP_i + 1)$$

in der eckigen Klammer von Gleichung (III) bzw. (VIII) zu berechnen, kann ein beliebiges Addierverfahren verwendet werden. Um jedoch Zeit zu sparen, wird mit Vorteil ein mehrstufiger "modulo carry-save" Addierer verwendet. Pro Stufe werden bei einem solchen Addierer jeweils drei n-Bit Zahlen zusammengezählt und als Resultat wird ein redundantes n-Bit Zahlenpaar, bestehend aus einem Summen- und einem Carryvektor, ausgegeben. Die Addition erfolgt dabei bitweise, indem jeweils die drei gleichwertigen Bits der drei Operanden separat zusammenzählt werden. Das Resultat sind n 2-Bit Zahlen, wobei jeweils das LSB (least significant bit) als Summenbit und das MSB (most significant bit) als Carrybit bezeichnet wird. Die n Summenbits bilden den Summenvektor und die von den Carrybits gebildete n-Bit Zahl wird mit zwei multipliziert, d.h. jedes Bit wird um eine Position nach links verschoben, und zur modulo-Korrektur wird das oberste Bit invertiert an die jetzt freie unterste Bitposition geschrieben, was den n-Bit Carryvektor ergibt.

Wenn, wie im vorliegenden Fall, mehr als drei Summanden addiert werden müssen, werden mehrere solcher "modulo carry-save"-Addiererstufen hintereinandergeschaltet, wobei jeweils die beiden Ausgänge des vorangehenden Addierers und ein weiterer Summand zusammengezählt werden. Das Resultat der "carry-save" Addition aus Gleichung (VII) bzw. (VIII) ist demnach das redundante Zahlenpaar

$$(XI) \qquad \left(P_C, P_S\right) = K + \sum_{i=0}^{n-1}(PP_i + 1) \quad \text{bzw.}$$

$$(XII) \qquad \left(P_C, P_S\right) = K + T + \sum_{i=0}^{\frac{n}{2}-1}(PP_i + 1),$$

wobei je nach Generierung der partiellen Produkte ohne oder mit "Booth Recoding" die jeweiligen Werte für K, die partiellen Produkte $PP_i$ und, wenn vorhanden, auch T eingesetzt werden müssen und für das folgende Gleichung gilt:

$$\text{(XIII)} \qquad P = [P_C + P_S + 1] \mathrm{mod}(2^n + 1).$$

Damit kann P mit einem der bekannten Verfahren zur modulo $(2^n+1)$-Addition gemäss Gleichung (XIII) berechnet werden.

Eine möglichst effiziente Berechnung von P wird erreicht, indem sie gemäss folgender Gleichung mit einem "modulo carry-propagate" Addierer ausgeführt wird:

$$\text{(XIV)} \qquad P = [P_C + P_S + \bar{c}_{out}] \mathrm{mod}(2^n),$$

wobei $\bar{c}_{out}$ das invertierte Carrybit $c_{out}$ der Addition $[P_C + P_S]$ mit einem "carry-propagate"-Addierer bezeichnet. Bei einem solchen Addierer werden jeweils zwei Summanden, angefangen beim Bit mit dem niedrigsten Wert, Bit für Bit aufaddiert. Entsteht an der i-ten Stelle ein Carrybit, wird dieses zu den beiden Summandenbits an der Stelle i+1 hinzuaddiert. Das Resultat eines "carry-propagate"-Addierers ist also eine (n+1)-Bit Zahl, wobei das letzte Bit das Carrybit $c_{out}$ ist. Um schliesslich dieses invertierte Carrybit $\bar{c}_{out}$ gemäss Gleichung (XIV) zur schon berechneten Summe $[P_C + P_S]$ hinzuzuaddieren, kann ein beliebiger Addierer, beispielsweise ein Incrementer oder ein weiterer "carry-propagate"-Addierer verwendet werden. Damit aber auch diese Addition möglichst schnell durchgeführt werden kann, ist der "modulo carry-propagate"-Addierer erfindungsgemäss als "end-around-carry parallel prefix"-Addierer ausgebildet. Dabei wird die Bildung der Summe $[P_C + P_S]$ als Präfix-Problem (bei dem jedes Ausgangsbit von jedem Eingangsbit gleicher oder niedrigerer Ordnung abhängt) formuliert und mit einem bekannten parallelen Präfix-Addierer berechnet. Um daraus einen modulo $(2^n+1)$-Addierer zu erhalten, wird eine zusätzliche Präfix-Stufe angehängt, welche als Inkrementer benutzt und durch das rückgeführte Carrybit $c_{out}$ der zweitletzten Präfix-Stufe kontrolliert wird und in einem einzigen weiteren Schritt das gewünschte Resultat $[P_C + P_S + \bar{c}_{out}]$ liefert. Die anschliessende modulo $(2^n)$-Korrektur wird durchgeführt, indem vom (n+1)-Bit langen Resultat dieser Addition lediglich das oberste Bit abgeschnitten wird.

Um die Addition der partiellen Produkte, der Konstante K und, wenn vorhanden, des Korrekturterms T zu beschleunigen, werden die benötigten "carry-save" Addierer vorzugsweise in einer Baumstruktur, einem sogenannten "Wallace Tree", angeordnet. Durch parallele Berechnung können so einige Addierer-Stufen eingespart und das gesamte Verfahren beschleunigt werden.

Wenn das Modul $(2^n+1)$ eine Primzahl ist, definiert die modulo-Multiplikation gemäss Gleichung (I) eine Gruppe mit den Elementen 1, 2, ..., $2^n$. Das Element 0 kommt in der Gruppe nicht vor. Die Zahl 0 kann daher benutzt werden, um den Wert $2^n$ darzustellen. Zur Darstellung des Werts $2^n$ kann aber auch ein Extra-Bit verwendet werden. Bei einer weiteren bevorzugten Ausführungsform der Erfindung werden deshalb die Fälle $X=Y=2^n$, $X=2^n$ und $Y=2^n$ separat behandelt und das redundante Zahlenpaar $(P_C, P_S)$ folgendermassen bestimmt: Ist $X=Y=2^n$, wird $P_C = 0$ und $P_S = 0$, ist $X=2^n$ und $Y \neq 2^n$, $P_C = \bar{Y}$ und $P_S = 1$ und für den Fall $Y=2^n$, und $X \neq 2^n$ wird $P_C = 1$ und $P_S = \bar{X}$.

Selbstverständlich kann das erfindungsgemässe Verfahren derart abgeändert werden, dass auch der Wert Null für die beiden Operanden erlaubt ist.

Das erfindungsgemässe Verfahren eignet sich aber nicht nur zur Verarbeitung von Zahlen, die in normaler, binärer Zahlendarstellung vorliegen, sondern auch zur Verarbeitung von Zahlen. die in "Diminished-1"-Zahlendarstellung vorliegen. Bei dieser Darstellungsart für binäre Zahlen wird eine beliebige Zahl Z dargestellt durch die Zahl Z', welche sich aus Z ergibt, indem man 1 von Z abzählt: $Z'=Z-1$. Die beiden Operanden X und Y werden damit dargestellt als $X'= X-1$ resp. $Y'= Y-1$. Auch das Resultat P wird in dieser Zahlendarstellung als $P'= P-1$ ausgegeben und berechnet gemäss

$$\text{(XV)} \qquad P' = (X' \cdot Y' + X' + Y') \mathrm{mod}(2^n + 1).$$

Dadurch wird zwar wegen der zusätzlichen Addition von X' und Y' gegenüber Gleichung (I) der Platzbedarf wie auch die Durchlaufzeit der Schaltungsanordnung etwas erhöht, aber da in der modulo $(2^n+1)$-Arithmetik die Zahlen häufig schon in der "Diminished-1"-Darstellung vorliegen, entfällt in diesem Fall die sonst notwendige Konversion von der "Diminished-1"- in die Normal-Zahlendarstellung.

Bei einigen Anwendungen muss neben dem modulo-Produkt P auch die modulo-Summe

$$\text{(XVI)} \qquad Q = (P + W) \mathrm{mod}(2^n)$$

berechnet werden, wobei Q und W binäre Zahlen der Länge n sind. Mit der Bestimmung von Q kann natürlich abgewartet werden, bis die Berechnung von P abgeschlossen ist. Danach erfolgt die Bestimmung von Q mit einem der bekannten Verfahren zur Addition zweier binärer Zahlen der Länge n und anschliessender modulo-Korrektur.

Da Q aber meistens so schnell wie möglich bestimmt werden muss, wird erfindungsgemäss nicht abgewartet, bis P vorliegt, sondern Q wird gemäss folgender Gleichung berechnet:

$$(XVII) \qquad Q = (P_C + P_S + \bar{c}_{out} + W)\bmod(2^n).$$

Die Verwendung des invertierten Carrybits $\bar{c}_{out}$ der "carry-propagate"-Addition von $P_C$ und $P_S$ ermöglicht eine Verkürzung der Durchlaufzeit bei der Berechnung von Q, da das Carrybit nicht nochmals mit einem zusätzlichen "carry-propagate" Addierer berechnet werden muss, sondern einfach von der Schlussaddition der Berechnung von P übernommen werden kann.

Die Berechnung von Q gemäss Gleichung (XVII) schliesslich erfolgt vorzugsweise in zwei Schritten: Sobald $P_C$ und $P_S$ vorliegen, wird im ersten Schritt mit einem normalen "carry-save" Addierer, bei dem im Gegensatz zum "modulo carry-save" Addierer bei der Bildung des Carryvektors das höchste Bit weder invertiert, noch an die unterste Bitposition verschoben wird, das redundante Zahlenpaar

$$(XVIII) \qquad (Q_C, Q_S) = (P_C + P_S + W)$$

bestimmt. Nachdem das carry-out $\bar{c}_{out}$ der "carry-propagate"-Addition von $P_C$ und $P_S$ bekannt ist, kann Q im zweiten Schritt gemäss

$$(XIX) \qquad Q = (Q_C + Q_S + \bar{c}_{out})\bmod(2^n)$$

bestimmt werden. Die Summe $(Q_C + Q_S + \bar{c}_{out})$ kann dabei wiederum mit einem beliebigen Addierverfahren, analog der Schlussaddition von P aber vorzugsweise mit einem "modulo carry-propagate" Addierer gebildet werden. Die modulo $(2^n)$-Korrektur erfolgt wiederum auf bekannte Art und Weise.

Auch die modulo-Summe Q kann mit dem erfindungsgemässen Verfahren für Zahlen X, Y und W berechnet werden, die in "Diminished-1"-Zahlendarstellung X'=X-1, Y'=Y-1 sowie W'= W - 1 vorliegen. Das Resultat Q'= Q - 1 ergibt sich somit zu

$$(XX) \qquad Q' = (P'+W'+1)\bmod(2^n).$$

Auch hier sind Platzbedarf und Durchlaufzeit der Schaltungsanordnung wegen der zusätzlichen Addition von 1 gegenüber Gleichung (XVI) leicht erhöht, aber auch hier entfällt meistens die Konversion zwischen den beiden Zahlendarstellungen, was diese Nachteile meist wieder wettmacht.

Das erfindungsgemässe Verfahren eignet sich insbesondere zur Anwendung in einem Verschlüsselungsverfahren, wie es in der EP 0 482 154 B1 offenbart ist. Dieses Verschlüsselungsverfahren umfasst mehrere Verschlüsselungsstufen, in welchen jeweils mehrere modulo $(2^n+1)$-Produkte berechnet werden müssen, wobei nach rund der Hälfte der Produkte direkt die modulo $(2^n)$-Summe dieses Produktes und eines weiteren Summanden gebildet werden muss.

Eine erfindungsgemässe Schaltungsanordnung weist mehrere Eingänge für die Eingangsvariablen X und Y auf und umfasst mehrere Schaltungsteile. Einen ersten Schaltungsteil zur Generierung der partiellen Produkte $PP_i$, einen zweiten Schaltungsteil zur Bereitstellung der Konstante K, einen dritten Schaltungsteil zur Bestimmung der redundanten Summe

$$(XXI) \qquad (P_C, P_S) = \left[ K + \sum_{i=0}^{n-1} (PP_i + 1) \right],$$

einen vierten Schaltungsteil zur Unterscheidung der Fälle $[X \neq 2^n$ und $Y \neq 2^n]$, $[X = Y = 2^n]$, $[X = 2^n$ und $Y \neq 2^n]$ oder $[X \neq 2^n$ und $Y = 2^n]$ sowie zur Berechnung und Auswahl des redundanten Zahlenpaares $(P_C, P_S)$ in Abhängigkeit der Werte von X und Y und einen fünften Schaltungsteil zur Berechnung und modulo-Korrektur von P. An einem Ausgang der Schaltungsanordnung liegt das Resultat P an:

$$(XXII) \qquad P = (X \cdot Y) \bmod (2^n + 1) \ .$$

Eine bevorzugte Ausführungsform der erfindungsgemässen Schaltungsanordnung weist einen weiteren Eingang für die Eingangsvariable W auf und beinhaltet einen sechsten Schaltungsteil zur Berechnung der redundanten Summe

$$(XXIII) \qquad (Q_C, \ Q_S) = (P_C + P_S + W)$$

und einen siebten Schaltungsteil zur Berechnung der modulo-Summe

$$(XXIV) \qquad Q = (Q_C + Q_S + \bar{c}_{out}) \bmod (2^n)$$

An den Ausgängen der Schaltungsanordnung liegen die Resultate

$$(XXV) \qquad P = (X \cdot Y) \bmod (2^n + 1) \ \text{und} \ Q = (P + W) \bmod (2^n)$$

an.

Die erfindungsgemässe Schaltungsanordnung kann natürlich auch derart abgeändert werden, dass P und Q auch dann korrekt berechnet werden, wenn X, Y und W in "Diminished-1"-Zahlendarstellung vorliegen. Ebenso kann die Schaltungsanordnung modifiziert werden, dass die partiellen Produkte mittels "Booth Recoding"-Algorithmus generiert und das Resultat P gemäss Gleichung (VIII) und das Resultat Q mit den entsprechenden Werten für $P_C$ und $P_S$ gemäss Gleichung (XII) berechnet wird, und dies sowohl für Zahlen in normaler, wie auch für solche in "Diminished-1"-Darstellung.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1 Ein Blockschaltbild einer Verschlüsselungsstufe zur Umwandlung eines binären Datenblockes;

Fig. 2 ein Blockschaltbild eines erfindungsgemässen Multiplizier-Addierwerkes.

Grundsätzlich sind in den Figuren gleiche Teile mit gleichen Bezugszeichen versehen.

**Wege zur Ausführung der Erfindung**

Im folgenden wird ein Ausführungsbeispiel erläutert, welches von einer bekannten Vorrichtung zur Verschlüsselung von Daten ausgeht. Die hier interessierende Vorrichtung ist z.B. in der EP 0 482 154 B1 beschrieben. Sie dient dazu, einen jeweils ersten binären Datenblock einer ersten Länge in einen zugeordneten binären Datenblock der gleichen Länge unter Verwendung wenigstens eines, frei wählbaren, binären Steuerblockes umzuwandeln. Die Vorrichtung weist mehrere erste Eingänge auf zur Eingabe von wenigstens zwei ersten Teilblöcken einer zweiten Länge, die zusammen den ersten Digitalblock bilden. Sie weist mehrere zweite Eingänge auf zur Eingabe von wenigstens zwei Steuerblöcken der zweiten Länge. Sie weist weiter eine Logik auf, die jeweils nacheinander wenigstens vier logische Operationen durchführt, wobei wenigstens zwei dieser Operationen von unterschiedlicher Sorten sind. Die Logik ist so ausgebildet, dass wenigstens die überwiegende Zahl aller Paare unmittelbar aufeinanderfolgender Operationen aus zwei Operationen unterschiedlicher Sorte besteht, und dass durch jede Operation jeweils zwei Eingangsblöcke der zweiten Länge in einen Ausgangsblock derselben Länge umgewandelt werden, wobei die Eingangsblöcke entweder erste Teilblöcke, Steuerblöcke und/oder Ausgangsblöcke vorhergehender Operationen sein können. Die beschriebene Vorrichtung weist auch mindestens einen Ausgang auf zur Ausgabe von wenigstens zwei zweiten Digitalblöcken der zweiten Länge, welche jeweils den ersten Teilblöcken zugeordnet sind und zusammen den zweiten Digitalblock bilden.

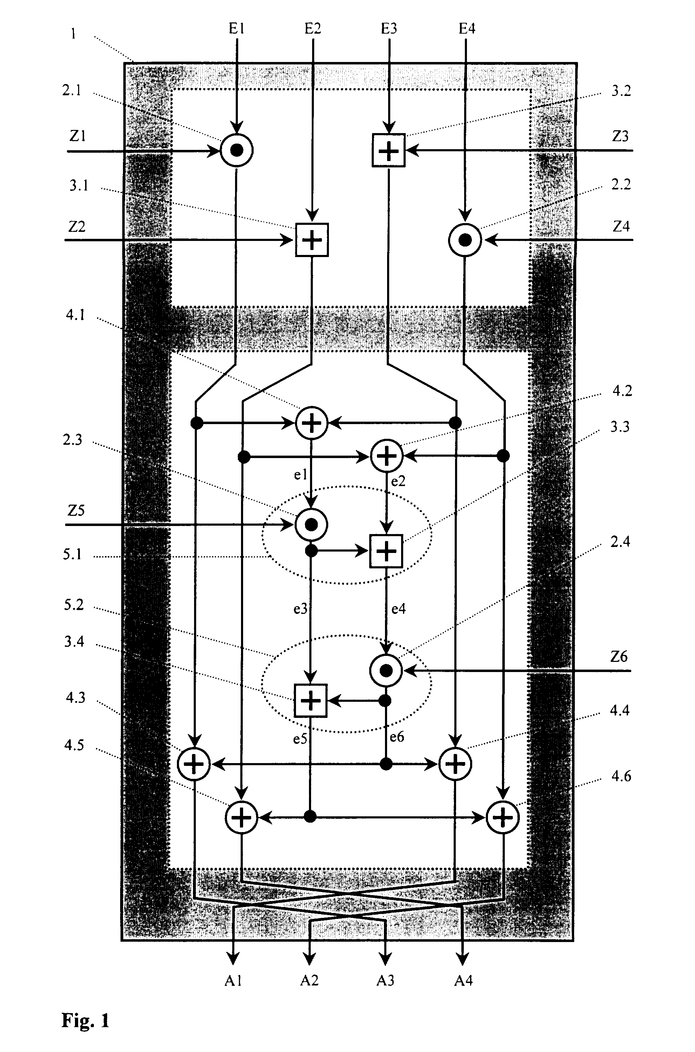

Figur 1 zeigt ein Blockschaltbild einer Verschlüsselungsstufe zur Umwandlung eines Digitalblockes 1, wie sie aus der EP 0 482 154 B1 bekannt ist (siehe die dortige Fig. 9, wobei auch der Inhalt der erweiterten Verschlüsselungslogik und der ergänzenden Verschlüsselungslogik eingezeichnet wurde). Sie weist vier erste Eingänge zur Eingabe von vier ersten Teilblöcken E1 bis E4 der Länge n sowie sechs zweite Eingänge zur Eingabe von sechs Steuerblöcken Z1 bis Z6 der Länge n auf. Weiter weist sie 4 Ausgänge zur Ausgabe von vier Digitalblöcken A1 bis A4 der Länge n auf, die jeweils den ersten Teilblöcken zugeordnet sind und zusammen den zweiten Digitalblock bilden. Ferner weist die gezeigte Verschlüsselungsstufe vier erste Operationseinheiten 2.1 bis 2.4 zur Durchführung einer ersten Sorte von Operationen, vier zweite Operationseinheiten 3.1 bis 3.4 zur Durchführung einer zweiten Sorte von Operationen und sechs dritte Operationseinheiten 4.1 bis 4.6 zur Durchführung einer dritten Sorte von Operationen auf, wobei jede Operationseinheit zwei Eingänge für zwei Digitalblöcke der Länge n und einen Ausgang für einen Digitalblock der Länge n aufweist, wobei die Eingangsdigitalblöcke jeweils als n-Bit Zahlen interpretiert werden. Die Operationen, die von den verschiedenen Operationseinheiten durchgeführt werden, sind für die ersten Operationseinheiten 2.1 bis 2.4 das modulo $(2^n+1)$-Produkt, für die zweiten Operationseinheiten 3.1 bis 3.4 die modulo $(2^n)$-Summe und für die dritten Operationseinheiten 4.1 bis 4.6 die Bit-für-Bit-Exklusiv-Oder-Operation der beiden Eingangsdigitalblöcke. Das Resultat wird als entsprechender Digitalblock am Ausgang jeder Operationseinheit ausgegeben.

Auf zwei der vier Operationseinheiten der ersten Sorte 2.3 und 2.4 folgt direkt je eine Operationseinheit der dritten Sorte 3.3 bzw. 3.4, welche zusammen jeweils einen Funktionsblock 5.1 bzw. 5.2 mit je drei Eingängen und zwei Ausgängen bilden, An einem Ausgang wird als Resultat das modulo $(2^n+1)$-Produkt von zwei Eingängen und am anderen Ausgang die modulo $(2^n)$-Summe des ersten Resultates und des dritten Einganges ausgegeben. Die Berechnung dieser beiden Resultate erfolgt nun mit dem erfindungsgemässen Verfahren, womit sich die Durchlaufzeit der Vorrichtung zur Umwandlung eines binären Datenblockes aus der EP 0 482 154 B1 erheblich verkürzen lässt.

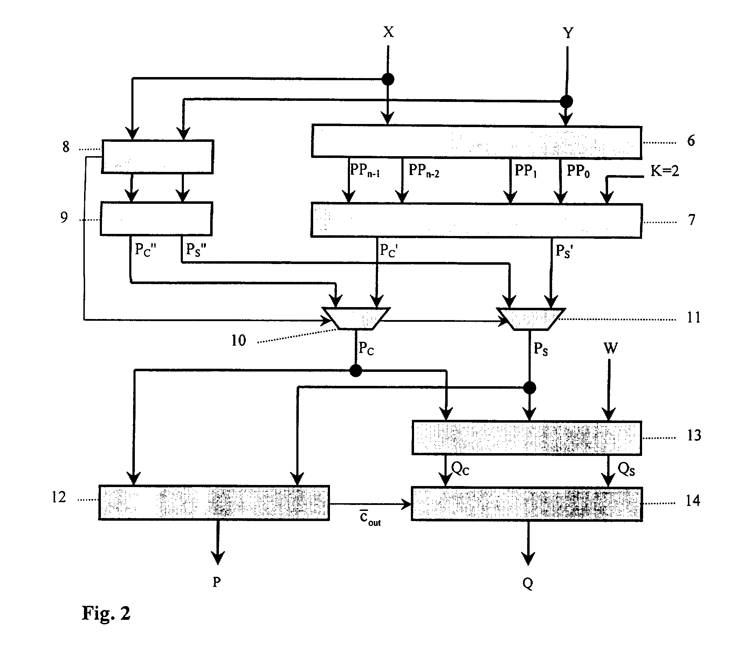

Figur 2 zeigt ein Blockschaltbild einer Schaltungsanordnung für die Durchführung des erfindungsgemässen Verfahrens zur Berechnung des modulo-Produktes

$$P = (X \cdot Y) \bmod (2^n + 1)$$

und der modulo-Summe Q

$$Q = (P + W) \bmod (2^n).$$

X, Y und W sind binäre Zahlen der Länge n in normaler Zahlendarstellung

$$X = \sum_{i=0}^{n-1} 2^i x_i \quad , \quad Y = \sum_{i=0}^{n-1} 2^i y_i \quad \text{und} \quad W = \sum_{i=0}^{n-1} 2^i w_i$$

und bilden die Eingänge der erfindungsgemässen Schaltungsanordnung, P und Q sind ebenfalls binäre Zahlen der Länge n in normaler Zahlendarstellung und bilden die Ausgänge der Schaltungsanordnung. Die Eingänge X und Y sowie die Ausgänge P und Q entsprechen den Eingängen Z5 und e1 resp. den Ausgängen e3 und e4 des Funktionsblocks 5.1 aus Fig. 1 bzw. den Eingängen e4 und Z6 resp. den Ausgängen e6 und e5 des Funktionsblocks 5.2 aus Fig. 1 Der Eingang W entspricht dem Eingang e2 des Funktionsblocks 5.1 aus Fig. 1 bzw. dem Eingang e3 des Funktionsblocks 5.2 aus Fig. 1.

Im Partialprodukt-Generator 6 werden gemäss Gleichung (VII) die n partiellen Produkte $PP_0$, $PP_1$, ... , $PP_{n-1}$

$$PP_i = x_i \cdot y_{n-i-1} \cdots y_0 \bar{y}_{n-1} \cdots \bar{y}_{n-i} + \bar{x}_i \cdot 0 \cdots 0 1 \cdots 1$$

vorzugsweise mittels Multiplexer gebildet, wobei mit $\bar{x}_i$, bzw. $\bar{y}_i$ jeweils das invertierte Bit von $x_i$ bzw. $y_i$ und mit $0 \cdots 0 1 \cdots 1$ eine n-Bit Zahl gemeint ist, deren obere (n-i) Bits 0 und deren untere i Bits 1 sind.

Ohne Verwendung von "Booth Recoding" entfällt die Generierung des Korrekturterms T und die Konstante K hat den Wert 2.

Die Addition der n partiellen Produkte und der Konstante K erfolgt in einem "modulo carry-save" Addierer 7 für (n+1) Summanden, der als Resultat das redundante Zahlenpaar

$$(P_C{'}, P_S{'}) = \left[ 2 + \sum_{i=0}^{n-1} (PP_i + 1) \right]$$

liefert.

Da der Wert 0 für die Eingangsvariablen X und Y nicht verwendet wird, da er beispielsweise in der Kryptologie keinen Beitrag zur Verschlüsselung leistet, ist es möglich, dass X und Y den Wert $2^n$ annehmen können, welcher dann jeweils durch 0 dargestellt wird. Für den Fall, dass X oder Y oder beide den Wert $2^n$ besitzen, wird das redundante Zahlenpaar $(P_C, P_S)$ jedoch nicht mit Hilfe der partiellen Produkte $PP_i$, sondern auf spezielle Art und Weise berechnet. Dazu dienen der Null-Detektor 8, der feststellt, ob X oder Y oder beide den Wert $2^n$ besitzen (und damit durch die Zahl Null dargestellt werden), die $(2^n)$-Korrektureinheit 9, die in Abhängigkeit von X und Y ein redundantes Zahlenpaar $(P_C{''}, P_S{''})$ berechnet sowie zwei Multiplexer 10 bzw. 11, die in Abhängigkeit von X bzw. Y die richtigen Werte $(P_C{'}, P_S{'})$ oder $(P_C{''}, P_S{''})$ für das redundante Zahlenpaar $(P_C, P_S)$ auswählen. Die $(2^n)$-Korrektureinheit 9 berechnet das Zahlenpaar $(P_C{''}, P_S{''})$ folgendermassen: Für $X=Y=2^n$, wird $(P_C, P_S) = (0,0)$, für $X=2^n$ und $Y \neq 2^n$, wird $(P_C, P_S) = (\bar{Y},1)$ und für $Y=2^n$ und $X \neq 2^n$ wird $(P_C, P_S) = (1,\bar{X})$.

Sind die richtigen Werte für $(P_C, P_S)$ bestimmt, folgt die Berechnung von P. Dazu werden $P_C$ und $P_S$ mit einem Produkt-Schlussaddierer 12 addiert, der als "modulo carry-propagate" Addierer ausgeführt ist. Als Zwischenresultat liefert dieser Produkt-Schlussaddierer 12 das Carrybit $c_{out}$ der "carry-propagate" Addition von $P_C$ und $P_S$. Damit wird P schliesslich berechnet als

$$P = [P_C + P_S + \bar{c}_{out}]\mathrm{mod}(2^n).$$

Die notwendige modulo $(2^n)$-Korrektur zum Schluss kann ganz einfach durchgeführt werden, indem vom $(n+1)$ Bit langen Resultat der "carry-propagate" Addition $[P_C + P_S + \bar{c}_{out}]$ nur die unteren n Bits am Ausgang der Schaltungsanordnung als Resultat P ausgegeben werden.

Aber nicht nur die Berechnung von P, sondern auch jene von

$$Q = (P + W)\mathrm{mod}(2^n) = (P_C + P_S + \bar{c}_{out} + W)\mathrm{mod}(2^n)$$

muss meist möglichst schnell erfolgen. Deshalb wird nicht abgewartet, bis P bestimmt ist, sondern die Berechnung von Q wird aufgeteilt in zwei Schritte. Sobald $P_C$ und $P_S$ vorliegen, wird im "carry-save" Addierer 13 die Summe $P_C + P_S + W$ gebildet, was als Resultat das redundante Zahlenpaar $(Q_C, Q_S)$ ergibt. Um schliesslich Q zu bestimmen, wird erfindungsgemäss das Zwischenresultat $\bar{c}_{out}$ des Produkt-Schlussaddierers 12 hergenommen und Q mit dem Summen-Schlussaddierer 14, der ebenfalls ein "modulo carry-propagate" Addierer ist, bestimmt gemäss

$$Q = (Q_C + Q_S + \bar{c}_{out})\mathrm{mod}(2^n).$$

Auch hier erfolgt die modulo $(2^n)$-Korrektur, indem von der Summe $(Q_C + Q_S + \bar{c}_{out})$ nur die unteren n Bits als Resultat Q ausgegeben werden.

Zusammenfassend ist festzustellen, dass sowohl bei der Berechnung des modulo-Produktes P durch die spezielle Art und Weise der Generierung der partiellen Produkte, womit die zeitaufwendige Berechnung eines Korrekturterms, wie es beim Stand der Technik erforderlich ist, entfällt. als auch bei der Berechnung der modulo-Summe Q durch die Übernahme des Carrybits der Schlussaddition von P für die Schlussaddition von Q ein erheblicher Zeitgewinn resultiert.

**Patentansprüche**

1. Verfahren zur Bestimmung des modulo-Produktes $P = (X * Y)\mathrm{mod}(2^n +1)$ wobei X, Y und P n-Bit Zahlen sind, dadurch gekennzeichnet, dass das Produkt P berechnet wird gemäss

$$P = \left[ K + \sum_{i=0}^{n-1} (PP_i + 1) \right] \mod(2^n + 1)$$

wobei K eine Konstante und $PP_i$ das i-te partielle Produkt von X und Y ist.

**2.** Verfahren nach Anspruch 1, dadurch gekennzeichnet, dass K=2 ist und die partiellen Produkte berechnet werden gemäss $PP_i = x_i \cdot y_{n-i-1}...y_0 \bar{y}_{n-1}...\bar{y}_{n-i} + \bar{x}_i.0...01...1$, wobei $x_j$ bzw. $y_j$ das j-te Bit von X bzw. Y und $\bar{x}_j$ bzw. $\bar{y}_j$ das Inverse davon bezeichnet.

**3.** Verfahren nach Anspruch 1, dadurch gekennzeichnet, dass die Bestimmung der partiellen Produkte $PP_i$ mittels "Booth Recoding" beschleunigt wird, wobei ein zusätzlicher Term T addiert werden muss und P gemäss

$$P = \left[ K + T + \sum_{i=0}^{\frac{n}{2}-1} (PP_i + 1) \right] \mod(2^n + 1)$$

berechnet wird, wobei K = 1 ist und die $PP_i$ sowie die einzelnen Bits $t_i$ von T in Abhängigkeit von X und Y gemäss folgender Tabelle berechnet werden:

| $x_{2i+1}$ | $x_{2i}$ | $x_{2i-1}$ | $PP_i$ | $t_{2i+1}$ | $t_{2i}$ |
|---|---|---|---|---|---|
| 0 | 0 | 0 | 0 ... 0 1 ... 1 | 1 | 0 |
| 0 | 0 | 1 | $y_{n-2i-1} \cdots y_0 \bar{y}_{n-1} \cdots \bar{y}_{n-2i}$ | 1 | 1 |
| 0 | 1 | 0 | $y_{n-2i-1} \cdots y_0 \bar{y}_{n-1} \cdots \bar{y}_{n-2i}$ | 1 | 0 |
| 0 | 1 | 1 | $y_{n-2i-2} \cdots y_0 \bar{y}_{n-1} \cdots \bar{y}_{n-2i-1}$ | 1 | 0 |
| 1 | 0 | 0 | $\bar{y}_{n-2i-2} \cdots \bar{y}_0 y_{n-1} \cdots y_{n-2i-1}$ | 0 | 1 |
| 1 | 0 | 1 | $\bar{y}_{n-2i-1} \cdots \bar{y}_0 y_{n-1} \cdots y_{n-2i}$ | 0 | 1 |
| 1 | 1 | 0 | $\bar{y}_{n-2i-1} \cdots \bar{y}_0 y_{n-1} \cdots y_{n-2i}$ | 0 | 0 |
| 1 | 1 | 1 | 1 ...1 0 ... 0 | 0 | 1 |

wobei $x_{-1}=0$ ist und die beiden Bits $t_0$ und $t_1$ Spezialfälle sind und berechnet werden mit $t_0 = \bar{x}_1 \cdot \bar{x}_0 \cdot \bar{x}_{n-1} + x_1 \cdot \bar{x}_0 \cdot x_{n-1} + x_0 \cdot \bar{x}_{n-1}$ bzw. $t_1 = \bar{x}_1 + \bar{x}_0 \cdot \bar{x}_{n-1}$, wobei das "·"-Zeichen die logische "UND"-Verknüpfung und das "+"-Zeichen die logische "ODER"-Verknüpfung der einzelnen Bits darstellt.

**4.** Verfahren nach einem der Ansprüche 1 bis 3, dadurch gekennzeichnet, dass die Berechnung der Summe

$$\left[ K + \sum_{i=0}^{n-1} (PP_i + 1) \right] \quad \text{bzw.} \quad \left[ K + T + \sum_{i=0}^{\frac{n}{2}-1} (PP_i + 1) \right]$$

mit einem "modulo carry-save" Addierer ausgeführt wird, der als Resultat das redundante Zahlenpaar $(P_C, P_S)$ liefert, wobei $P_C$ und $P_S$ die Gleichung $P = (P_C + P_S + 1) \mod(2^n + 1)$ erfüllen.

**5.** Verfahren nach Anspruch 4, dadurch gekennzeichnet, dass P mit einem "modulo carry-propagate" Addierer mit $P = (P_C + P_S + \bar{c}_{out}) \mod 2^n$ berechnet wird, wobei $\bar{c}_{out}$ das invertierte Carrybit $c_{out}$ der Addition von $P_C$ und $P_S$ ist.

**6.** Verfahren nach Anspruch 4 oder 5, dadurch gekennzeichnet, dass die Berechnung von $(P_C, P_S)$ mittels eines Wallace-Trees beschleunigt wird.

**7.** Verfahren nach einem der Ansprüche 4 bis 6, dadurch gekennzeichnet, dass $(P_C, P_S) = (\bar{Y},1)$ für den Fall dass $X = 2^n$, $(P_C, P_S) = (\bar{X},1)$ für den Fall dass $Y = 2^n$ und $(P_C, P_S) = (0,0)$ für den Fall dass $X = Y = 2^n$, wobei $\bar{X}$ bzw. $\bar{Y}$ die n-Bit Zahlen mit den invertierten Bits von X bzw. Y bezeichnen, und der Wert $2^n$ dargestellt wird durch die Zahl Null.

**8.** Verfahren nach einem der Ansprüche 1 bis 7, dadurch gekennzeichnet, dass X, Y und P in 'diminished-1' Zahlendarstellung X', Y' bzw. P' vorliegen, wobei X'= X-1, Y'= Y-1 sowie P' = P -1 ist und P' berechnet wird gemäss P'= $(X' \cdot Y' + X' + Y')\mathrm{mod}(2^n +1)$.

**9.** Verfahren nach einem der Ansprüche 4 bis 7, dadurch gekennzeichnet, dass zusätzlich zu P auch die Summe Q = $(P + W)\mathrm{mod}\ 2^n$ bestimmt wird, wobei W eine n-Bit Zahl ist.

**10.** Verfahren nach Anspruch 9, dadurch gekennzeichnet, dass Q berechnet wird mit Q = $(Q_C + Q_S + \bar{c}_{out})\mathrm{mod}(2^n)$, wobei das Zahlenpaar $(Q_C,Q_S)$ das Resultat der "carry-save" Addition $(P_C + P_S + W)$ ist und die Addition von $(Q_C + Q_S + \bar{c}_{out})$ mit einem "modulo carry-propagate" Addierer erfolgt.

**11.** Verfahren nach Anspruch 9 oder 10, dadurch gekennzeichnet, dass X, Y, P, W und Q in 'diminished-1' Zahlendarstellung X', Y', P', W' bzw. Q' vorliegen, wobei X'=X - 1, Y'= Y - 1 , P'= P - 1 , W'= W - 1 sowie Q'= Q - 1 ist und P' bzw. Q' berechnet wird gemäss P'= $(X' \cdot Y' + X' + Y')\mathrm{mod}(2^n + 1)$ bzw. Q' $(P'+W'+1)\mathrm{mod}(2^n)$.

**12.** Anwendung des Verfahrens nach Anspruch 1 in einem Verschlüsselungsverfahren, welches mindestens eine Berechnung der Art P = $(X * Y)\mathrm{mod}(2^n +1)$ oder mindestens je eine Berechnung der Art P = $(X * Y)\mathrm{mod}(2^n +1)$ und Q = $(P + W)\mathrm{mod}(2^n)$ umfasst.

**13.** Schaltungsanordnung zur Durchführung des Verfahrens nach Anspruch 1, dadurch gekennzeichnet, dass an den Eingängen der Schaltung die Zahlen X und Y anliegen, sie einen ersten Schaltungsteil zur Generierung der partiellen Produkte $PP_i$, einen zweiten Schaltungsteil zur Bereitstellung der Konstante K, einen dritten Schaltungsteil zur Bildung der redundanten Summe

$$(P_C, P_S) = \left[ K + \sum_{i=0}^{n-1} (PP_i + 1) \right],$$

einen vierten Schaltungsteil zur Unterscheidung der Fälle $[X{\neq}2^n$ und $Y{\neq}2^n]$, $[X{=}Y{=}2^n]$, $[X{=}2^n$ und $Y{\neq}2^n]$ oder $[X{\neq}2^n$ und $Y{=}2^n]$ sowie zur Berechnung und Auswahl des redundanten Zahlenpaares $(P_C,P_S)$ in Abhängigkeit der Werte von X und Y und einen fünften Schaltungsteil zur Berechnung und modulo-Korrektur von P aufweist und am Ausgang der Schaltung das Resultat P = $(X * Y)\mathrm{mod}(2^n + 1)$ liefert.

**14.** Schaltungsanordnung nach Anspruch 13, dadurch gekennzeichnet, dass sie einen sechsten Schaltungsteil zur Bildung der redundanten Summe $(Q_C,Q_S) = [P_C + P_S + W]$ und einen siebten Schaltungsteil zur Bildung der Summe Q = $(Q_C + Q_S + \bar{c}_{out})\mathrm{mod}(2^n)$ aufweist und am Ausgang der Schaltung die Resultate P = $(X * Y)\mathrm{mod}(2^n +1)$ und Q = $(P + W)\mathrm{mod}(2^n)$ liefert.

**15.** Schaltungsanordnung nach Anspruch 13 oder 14, dadurch gekennzeichnet, dass sie derart modifiziert wird, dass P bzw. Q korrekt berechnet werden, auch wenn die Zahlen X, Y und W in "Diminished-1"-Darstellung vorliegen und/oder dass die Generierung der partiellen Produkte mittels "Booth Recoding" durchgeführt wird.

**16.** Vorrichtung zur Verschlüsselung von Daten mit einer Schaltungsanordnung gemäss einem der Ansprüche 13, 14 oder 15.

Fig. 1

X          Y

8

9

PP_n-1    PP_n-2          PP_1    PP_0          K=2

6

7

P_C''    P_S''          P_C'          P_S'

10          11

P_C          P_S          W

13

Q_C          Q_S

12          $\overline{c}_{out}$          14

P          Q

**Fig. 2**

**Europäisches Patentamt**

**EUROPÄISCHER RECHERCHENBERICHT**

Nummer der Anmeldung

EP 99 81 0044

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | WANG Z ET AL: "AN EFFICIENT TREE ARCHITECTURE FOR MODULO 2 + 1 MULTIPLICATION" JOURNAL OF VLSI SIGNAL PROCESSING, Bd. 14, Nr. 3, Dezember 1996, Seiten 241-248, XP000636613 * Zusammenfassung * | 1 | G06F7/72 |
| A | WRZYSZCZ A ET AL: "A NEW MODULO 2A+1 MULTIPLIER" PROCEEDINGS OF THE INTERNATIONAL CONFERENCE ON COMPUTER DESIGN: VLSI IN COMPUTERS AND PROCESSORS, CAMBRIDGE, MA., OCT. 3 - 6, 1993,3. Oktober 1993, Seiten 614-617, XP000463478 INSTITUTE OF ELECTRICAL AND ELECTRONICS ENGINEERS * Zusammenfassung * * Seite 616, Spalte 1, letzte Zeile - Spalte 2, Zeile 17 * | 1 | |

**RECHERCHIERTE SACHGEBIETE (Int.Cl.6)**

G06F

Der vorliegende Recherchenbericht wurde für alle Patentansprüche erstellt

| Recherchenort | Abschlußdatum der Recherche | Prüfer |
|---|---|---|
| DEN HAAG | 14. April 1999 | Cohen, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

_____
& : Mitglied der gleichen Patentfamilie, übereinstimmendes Dokument

EPO FORM 1503 03.82 (P04C03)